# EUROPEAN PATENT APPLICATION

(11) **EP 1 788 752 A1**
(43) Date of publication of application: **23.05.2007**
(21) Application number: 05292477.6
(22) Date of filing: 21.11.2005
(51) Int. Cl.: H04L 12/56, H04L 29/06

(54) **Network node with control plane processor overload protection**

(71) Applicant: Alcatel Lucent, 75008 Paris (FR)
(72) Inventor: Verzijp, Nico Victor, 2018 Antwerpen (BE); Six, Erwin Alfons Constant, 9270 Kalken (BE); Dequeker, Hans Maurice Felix Corneel, 3020 Herent (BE); Gilon, Edith Béatrice Louise M.B., 1030 Bruxelles (BE); Huysegems, Rafael, 2800 Walem (Mechelen) (BE)
(74) Representative: Narmon, Gisèle Marie Thérèse

(57) **Abstract**

A network node comprises at least one data plane processor (101) for handling data packets of a first type (144) and for redirecting and rate-limiting data packets of α second type (142). A control plane processor (102) in the network node handles the data packets of α second type (142) redirected by the data plane processor (101). In order to protect the control plane processor (102) against overload, e.g. caused by Denial of Service (DoS) attacks, individual flows of data packets of the second type are identified for enhanced rate-limiting by the data plane processor (101).

## Description

### Field of the Invention

The present invention generally relates to overload protection for a control plane processor inside a network node, e.g. a DSLAM or Digital Subscriber Line Access Multiplexer, a BRAS or Broadband Remote Access Server, an IP edge router, etc. Such a network node typically has one or more data plane processors handling at wire speed incoming data packets that need no special treatment. This is called the fast path. Data packets that need a special treatment are redirected by the data plane processor(s) towards the control plane processor, also known as the slow path.

Note that there is no fixed relationship between the number of data plane processors and the number of control plane processors. This relationship may vary from a 1:1 (a dedicated control plane processor for each data plane processor), to a N:M or even N:1 (all N data plane processors are served by a single control plane processor). Special treatment could be any type of complex protocol handling, like for instance parameter checking for quality of experience purposes on RTP (Real-time Transport Protocol) messages, fragmenting/de-fragmenting IP (Internet Protocol) packets, text parsing on SIP (Session Initiation Protocol) messages, etc. Because no single general purpose or communication processor is capable of handling the packets that need special treatment at wire speed, adequate overload protection measures are needed for the control plane processor.

### Background of the Invention

Known solutions for overload protection of control plane processors in network nodes generally can be classified in two categories: the first category is based on static rate-limiting inside the data plane, the second category is based on low level packet dropping inside the control plane.

Static rate-limiting inside the data plane requires policers in the data plane that determine the maximum amount of data traffic that can be accepted and treated by the slow path, i.e. the control plane processor. The maximum is pre-configured to be a static value that the control plane processor is always able to handle. Static rate-limiting protection where the data plane processor's policing engines are used to protect the control plane from denial of service attacks is for instance suggested in the publication "Networking Systems Require Tight Control/Data Plane Integration" from author Hemant Triveldi. This publication of 29 May 2002 can be downloaded from the Internet via the URL: http://www.commsdesign.com/design_corner/showArticle.jhtml?articlelD=1650 4831

A drawback of the static rate-limiting solutions is that it requires knowledge in advance of the amount of traffic that each service running in the control plane can handle. These amounts are hard to predict and usually require empirical measurements. Once a maximum value has been determined for the amount of data packets that can be redirected to the control plane processor per time unit, the static rate-limiting solution is rather inflexible. Additional services may be installed to run on the control plane processor, impacting the amount of traffic that existing services can handle. An upgrade of the control plane processor may be executed, requiring a complete re-evaluation of all policing parameters used in the data plane. Static rate-limiting solutions require re-evaluations, new empirical measurements and eventually manual interventions to reconfigure the policers in the data plane each time upgrades or changes in the control plane services take place. Moreover, in case the data plane is equipped with multiple elements each redirecting data packets to the same control plane processor, the determination of maximum traffic rate values for the policers becomes extremely difficult, and the system becomes even less flexible in case of upgrades.

As opposed to static rate-limiting, low level packet drop solutions do not require any precautions inside the data plane. All traffic that needs special treatment is redirected towards the control plane processor, where low level software will start to drop data packets when the load on the control plane processor is becoming too high. Eventually, the control plane starts dropping packets belonging to certain classes or services. An example software package that implements low level packet dropping for certain pre-configured classes of packets is Cisco's Control Plane Policing (CPP) software described in the white paper "Deploying Control Plane Policing". The May 2005 update of this white paper can be extracted from the Internet via URL:
http://www.cisco.com/en/US/products/sw/iosswrel/ps1838/products_white_pap er09186a0080211f39.shtml

A disadvantage of low level packet drop solutions inside the control plane is that the software algorithm dropping the packets already consumes processing power in the control plane. Due to the fact that the control plane processor itself has to decide on the dropping of packets, its performance will decrease, in particular when the processor is near overload conditions. This shortcoming of low level packet drop solutions opens the door to Denial of Service (DoS) attacks on the slow path where an unlimited amount of malicious data packets that need special treatment are sent to the network node resulting in business impacting control plane processor outages. Further, low level packet drop solutions are blind regarding the different services running on the control plane and/or blind regarding the flows handled by the different services running on the control plane. In case only one service is receiving an excessive amount of data packets, the low level packet drop software will not only drop packets destined to the service in trouble, but for instance also packets destined to other services running on the control plane. More advanced implementations of low level packet dropping like Cisco's CPP solution, already cited above, distinguish between services or classes of packets. These implementations however do not only drop data packets from the flow(s) that cause a service running on the control plane to suffer from overload, but also impact other users making use of the same service or flows belonging to the same class.

The object of the present invention is to provide an alternate solution for overload protection of control plane processors inside network nodes, but which does not suffer from the shortcomings of the prior art static rate-limiting and low level packet drop solutions. It is an object to add flexibility to the static-rate limiting solution and to add more detailed flow control to a CPP-like solution.

### Summary of the Invention

The above drawbacks are overcome and the object of the current invention is realised through a network node as defined in claim 1 having an overload protection function at the control plane able to identify individual flows causing the overload such that the data plane processor can apply increased rate-limiting on those individual flows.

Thus, a SW process (or alternatively a hardware implemented version of the overload protection function) is monitoring the load on services running on the control plane and in case of overload is producing a detailed indication of which flow (or which user) is causing the overload condition. This indication is sent back to the data plane enabling dynamic rate-limiting of a single stream of packets (called a flow). The basic idea underlying the invention in other words is to implement flow control or user based flow control (because at least for access nodes a single flow can always be mapped to a single user inside network nodes) through a load protection function in the control plane providing detailed feedback to the data plane processor. The use of the flow-ID as rate-limiting granularity is the finest level of flow control achievable between the control plane and data plane. The current invention therefore enables the best possible control and flexibility. It provides DoS attack prevention for the control plane since the control plane processor no longer has to drop the packets itself, and does not require static pre-configuration.

The object of the current invention is further realised through a method for overload protection of a control plane processor as defined in claim 10.

An optional implementation of the current invention based on load monitoring means, flow identification means and instruction means, is defined in claim 2. Indeed, the load monitoring means may monitor services running on the control plane in order to identify the service(s) that reach an unacceptable CPU load level. Next, the flows will be identified that cause the service(s) to suffer from overload. Thereupon, instructions will be issued to the data plane to intensify the rate-limiting for the identified flows causing overload.

A possible way to monitor the load based on queue lengths is covered by claim 3. In this way, when data packets are sent as messages from the data plane to the control plane, it is sufficient to monitor the length of the message queues for different services and to determine which queues exceed a certain threshold in order to identify the services that have reached an unacceptable CPU load level.

An alternate way to monitor the load based on processing time is covered by claim 4. Thus, if the services maintain the processing time they consume within the control plane, simply interrogating the services and comparing the reported processing times to a threshold will enable the load monitor to identify the services that have reached an unacceptable CPU load level.

Yet another optional aspect of the current invention is that the identification of individual flows causing overload of the control plane processor might be based on interrogation of a dispatching function inside the control plane. This is defined by claim 5. The dispatching function in the control plane dispatches data packets that are redirected by the data plane to the different services running on the control plane. Once the services that suffer from overload are identified, the dispatcher may be consulted by the overload protection software to map individual flows onto the services in overload state such that the flows can be identified responsible for the overload situation.

Still an optional feature of the present invention is that the overload protection unit in the control plane might be able to identify individual flows for which the rate-limiting conditions in the data plane can be decreased or relaxed. This is covered by claim 6. In other words, the load protection function may open the throttle again and instruct the rate-limiting function in the data plane to return to a higher rate level again as soon as the service in trouble settles down again to normal operation load.

As indicated by claims 7, 8 and 9, the invention could find its way into different types of network nodes. Examples are access multiplexers like DSLAMs (Digital Subscriber Line Multiplexers), fibre aggregators, DLCs (Digital Loop Carriers); server nodes like BRASs (Broadband Remote Access Servers); routing/switching nodes like IP edge routers, ATM switches, etc.

### Brief Description of the Drawings

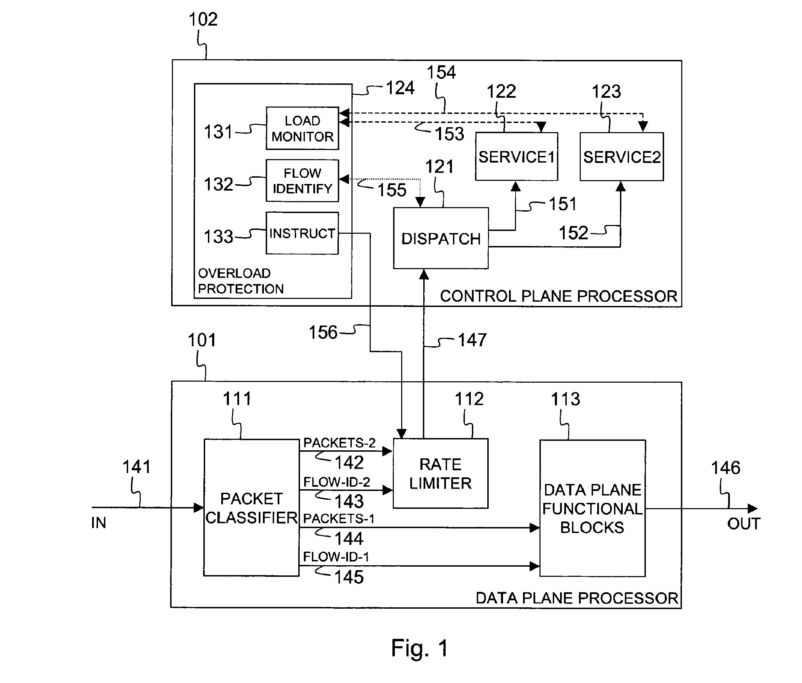

Fig. 1 is a functional diagram of a data plane processor and a control plane processor inside an embodiment of the network node according to the present invention.

### Detailed Description of Embodiment(s)

The functional block diagram in Fig. 1 shows a data plane and control plane processor architecture in a DSLAM (Digital Subscriber Line Access Multiplexer), which is a subscriber line aggregating network node used in DSL (Digital Subscriber Line) networks such as ADSL (Asymmetric Digital Subscriber Line) or VDSL (Very High Speed Digital Subscriber Line) networks.

Data packets received by the DSLAM, e.g. in upstream direction from a DSL CPE, enter the data plane processor 101 via port 141. The data packets pass through the packet classifier 111 which determines the flow-ID through inspection of the data packet and classifies the packet for further processing. The flow-ID is a unique identification of the stream of packets originating from a certain user and destined to a certain service. In general, the packet classifier 111 distinguishes between a first type of data packets 144 that can be processed entirely in the data plane and a second type of data packets 142 that need dedicated processing that cannot be performed at wire speed in the data plane. The first type of data packets 144 along with their flow-IDs 145 can be handled at wire speed in the data plane and consequently are forwarded to the other data plane functional blocks 113 for being processed there, and forwarded through outbound port 146. These other functional blocks 113 inside the data plane, following the packet classifier 111 can be of numerous types. It can for instance be a packet mangling block (e.g. to do NAT or Network Address Translation), it can be a traffic shaping/scheduling block, etc. The second type of data packets 142 along with their flow-IDs 143 are redirected to the control plane via the rate limiter 112. Typically, they belong to flows that require complex operations, like extensive parsing, encryption/decryption, editing and scheduling, fragmentation and de-fragmentation, validation, etc. Examples are SIP (Session Initiation Protocol) messages that require extensive text parsing, RTP (Real-time Transport Protocol) messages that require extensive monitoring of parameters for quality of service and quality of experience purposes, IP packets that require de-fragmentation, etc. Data packets of such flows are redirected to the control plane processor 102 via connection 147, after it has been checked by the rate limiter 112 in the data plane that the flow does not exceed the maximum acceptable rate (this maximum rate might be expressed as a maximum amount of bits or bytes per time unit, or alternatively as a maximum amount of packets per time unit). In the control plane processor 102, a dispatching function 121 dispatches the redirected data packets to different services, e.g. 122 and 123, that run on the control plane. For instance, IP packets that need to be de-fragmented (like for instance SIP packets) are dispatched via connection 151 to the de-fragmentation service 122, IGMP packets may be dispatched to the IGMP proxy server 123. Additional services may be included in the control data plane like for instance an RTP quality measurement service, but they are not drawn to avoid overloading the drawing. The dispatcher 121 in other words has the knowledge of the flow to service mapping and ensures that all redirected flows are delivered to the correct service running on the control plane. Additionally, the dispatcher 121 monitors the data packet rate of all the redirected flows. This information is essential in relation to the current invention and will be used by the overload protection function 124 as will be explained later on.

Key to the current invention is the presence of the overload protection function 124 in the control plane. This function consists of three pieces of software, i.e. load monitoring software 131, flow identification software 132, and rate-limiting instruction software 133. The load monitor 131 basically monitors the CPU load of each of the services, e.g. 122 and 123, running on the control plane. This is represented by the dashed lines 153 and 154 in Fig. 1. The load monitor software 131 for instance interrogates the operating system on the CPU time consumed by services 122 and 123 when it is assumed that the operating system keeps track of the control plane processor CPU time consumption. Variant ways exist to monitor the CPU time consumption by the different services running on the control plane, but this is rather an implementation choice. Next, the load monitor software 131 will compare the CPU load consumed by the services 122 and 123 with a threshold to determine if a service has reached an unacceptable level of CPU consumption in the control plane. If it is assumed for instance in Fig. 1 that the CPU time consumption of the de-fragmentation service 122 has exceeded the threshold, then the load monitor 131 shall request the flow identification software 132 to identify the flows that have caused the de-fragmentation service 122 to suffer from overload. The flow identification software 132 thereto contacts the dispatching function 121 which, as already indicated above, keeps track of the flow to service mapping and also of the data packet rates of each individual flow. Based on these data packet rates, the dispatcher 121 is able to determine which flows cause the de-fragmentation service 122 to suffer from overload and to identify those flows to the flow identification software 132 through the flow ID. This interaction between the flow identification software 132 and the dispatcher 121 is represented by the dotted line 155 in Fig. 1. The flow identification software 132 now informs the rate-limiting instruction software 133 on the flows that cause the overload in the control plane and requests the latter to issue instructions for rate limiter 112 in the data plane to intensify the rate-limiting for the flow or flows that cause the overload. The instruction software 133 uses channel 156 in Fig. 1 to send instructions containing the flow IDs and eventually the rate limit reductions to be applied to the flows that cause the overload of the control plane processor. The rate limiter 112, upon receipt of the instructions, immediately adjusts the maximum allowed packet rates (or bit rates) for the identified flows and this way protects the control plane against continued overload, which would otherwise be unavoidable e.g. in case of malicious DoS attacks.

Thanks to the explicit feedback from the control plane to the data plane, specifying the flow(s) that actually cause the service(s) on the control plane to suffer from overload, the system illustrated by Fig. 1 obtains a very fine grained and dynamic rate limiting for data packets redirected to the control plane. The use of the flow ID as rate limiting granularity between the control plane and the data plane is the finest level of flow control that can be achieved, and enables the most optimal control and flexibility. Fairness can be guaranteed between different users (or flows) because it is prevented that users, using the same service, are impacted when these users are not causing the service to suffer from overload.

Later on, when the de-fragmentation service 122 that was in trouble, settles down to normal operation again, the load monitor and flow identification software will again open the throttle and the instruction software 133 shall issue instructions for the rate limiter 112 to increase the maximum allowable packet rate (or bit rate) for those flows again, in order to relax the rate-limitations imposed on flows that temporarily caused overload of the control plane processor 102.

Typically, the rate monitoring of flows in the control plane according to the current invention will consume 1 à 2 % of the CPU capacity in the control plane processor 102, which is negligible.

Although the present invention has been illustrated by reference to specific embodiments, it will be apparent to those skilled in the art that various changes and modifications may be made within the spirit and scope of the invention. It is therefore contemplated to cover any and all modifications, variations or equivalents that fall within the spirit and scope of the basic underlying principles disclosed and claimed in this patent application. For example, Fig. 1 shows an architecture with a single data plane processor 101 and a single control plane processor 102, but any skilled person will appreciate that the principles underlying the current invention can be transposed and implemented with equal advantages in network nodes with for instance a 1/N architecture, i.e. having one control plane processor to serve N data plane processors. Another evident extension of the current invention, is that its applicability is not restricted to DSLAMs or access aggregators. Any network node, such as BRASs, edge routers, switches, switch/routers, DLCs, fibre aggregators, etc. could take benefit of the control plane processor protection mechanism according to the current invention. Further, it is emphasized that certain choices made above in relation to the system depicted in Fig. 1, were only made by way of example. For instance the load monitor, flow identification and instruction functions that constitute the basis of the current invention do not necessarily have to be implemented in software.

They may be integrated in the control plane hardware, or could be implemented through a hybrid combination of software and hardware. The connections 151, 152, 153, 154 and 155 between the different functional blocks in the control plane represent logical connections rather than physical connections. They may be software interfaces enabling certain parameter values to be shared between the different software modules or procedures that implement the functions 121, 122, 123, 131, 132 and 133. Further, the invention is not restricted to a particular implementation of the load monitoring technique applied by 131 or the flow identification technique applied by 132. A variant load monitoring technique could for instance rely on the lengths of message queues that contain the data packets destined for the different services running on the control plane. The lengths of these queues can be compared to thresholds to determine the services that suffer from overload and the flows that cause the overflow (if it is supposed that per-flow queuing is implemented). Further, the threshold whereto the queue lengths (or the CPU time consumption in case of the system of Fig. 1) are compared, might be equal for all services, or could be different for different services. The threshold could be pre-configured or might be adjustable during operation, e.g. through intervention of the operator. For the communication between control plane and data plane, e.g. the sending of instructions over connection 156, standardized protocols could be used in case the control plane processor 102 and data plane processor 101 come from different vendors, or proprietary protocols could be used in case the processors come from a single vendor. Lastly, it is noted here that the current invention could be combined or implemented together with static-rate limiting described above as one of the prior art solutions.

The maximum values used for static rate-limiting could for instance be made dynamically adjustable on the basis of feedback of the overload monitoring function in the control plane. Existing systems that apply static rate limiting in other words would be upgraded to apply dynamic user based flow control according to the present invention if the control plane is extended with an overload monitor and protection function according to the current invention and the static rate limits in the data plane are made adjustable on the basis of feedback received from the control plane.

## Claims

1. Network node comprising at least one data plane processor (101) for handling data packets of a first type (144) and for redirecting and rate-limiting data packets of a second type (142), and a control plane processor (102) for handling said data packets of a second type (142) redirected by said at least one data plane processor (101),
**CHARACTERIZED IN THAT** said control plane processor (102) comprises overload protection means (124) adapted to identify individual flows of data packets of said second type for enhanced rate-limiting by said at least one data plane processor (101).

2. Network node according to claim 1,
**CHARACTERIZED IN THAT** said overload protection means (124) comprise:
a. load monitoring means (131) for monitoring the processing load of said control plane processor (102) by individual packet handling services (122, 123) and for identifying at least one service (123) that overloads said control plane processor (102);
b. flow identification means (132) for identifying individual flows of data packets that cause said at least one service (123) to overload said control plane processor (102); and
c. instruction means (133) for instructing a rate limiter (112) inside said at least one data plane processor (101) to apply enhanced rate-limiting on said individual flows.

3. Network node according to claim 2,
**CHARACTERIZED IN THAT** said load monitoring means (131) comprise means for monitoring lengths of message queues associated with said packet handling services (122, 123), and means for comparing said lengths of said message queues to a threshold in order to identify said at least one service (123) that overloads said control plane processor (102).

4. Network node according to claim 2,
**CHARACTERIZED IN THAT** said load monitoring means (131) comprise means for requesting via an operating system amounts of processing time consumed by said packet handling services (122, 123), and means for comparing said amounts of processing time to a threshold in order to identify said at least one service (123) that overloads said control plane processor (102).

5. Network node according to claim 2,
**CHARACTERIZED IN THAT** said flow identification means (132) comprise means for querying a flow dispatcher (121) inside said control plane processor (102) to map individual flows of data packets onto said at least one service (123) that overloads said control plane processor (102).

6. Network node according to claim 2,
**CHARACTERIZED IN THAT** said overload protection means (124) further comprise:
means for identifying individual flows of data packets of said second type for relaxed rate-limiting by said at least one data plane processor (101).

7. Network node according to claim 1,
**CHARACTERIZED IN THAT** said network node is a Digital Subscriber Line Access Multiplexer (DSLAM).

8. Network node according to claim 1,
**CHARACTERIZED IN THAT** said network node is a Broadband Remote Access Server (BRAS).

9. Network node according to claim 1,
**CHARACTERIZED IN THAT** said network node is an Internet Protocol (IP) edge router.

10. Method for overload protection of a control plane processor (102) inside a network node wherein at least one data plane processor (101) handles data packets of a first type (144) and redirects and rate-limits data packets of a second type (142), and wherein said control plane processor (102) handles said data packets of a second type (142) redirected by said at least one data plane processor (101),
**CHARACTERIZED IN THAT** said method comprises identifying in said control plane processor (102) individual flows of data packets of said second type for enhanced rate-limiting by said at least one data plane processor (101).
